# EUROPEAN PATENT SPECIFICATION

(11) **EP 3 480 637 B1**
(45) Date of publication and mention of the grant of the patent: **30.10.2024**
(21) Application number: 18204131.9
(22) Date of filing: 02.11.2018
(51) Int. Cl.: G02B 6/44, G02B 6/25, G02B 6/255, B29C 45/14, B29C 31/04, B29C 35/08, B29C 45/46, G02B 6/36

(54) **SYSTEMS AND TECHNIQUES FOR SPLICING TOGETHER OPTICAL FIBER RIBBON CABLES HAVING DIFFERENT CORE-TO-CORE SPACINGS**
SYSTEME UND TECHNIKEN ZUM VERSPLEISSEN VON GLASFASERBANDKABELN MIT UNTERSCHIEDLICHEN KERN-ZU-KERN-ABSTÄNDEN
SYSTÈMES ET TECHNIQUES PERMETTANT D'ÉPISSAGE SIMULTANÉMENT DES CÂBLES À RUBAN EN FIBRE OPTIQUE AYANT DIFFÉRENTS ESPACEMENTS NOYAU À NOYAU

(30) Priority: 03.11.2017 US 201715802807
(43) Date of publication of application: 08.05.2019
(73) Proprietor: OFS FITEL LLC, Norcross, GA 30071 (US)
(72) Inventor: BUREK, Denis E., Cumming, 30040 (US); CZOSNOWSKI, Wladyslaw, Duluth, 30097 (US); LIANG, Yue, Johns Creek, GA 30097, Georgia (US)
(74) Representative: Stöckeler, Ferdinand

(56) References cited:
- EP-A1- 0 446 040
- CN-A- 103 587 018
- US-A1- 2003 077 345
- US-A1- 2004 036 188
- US-A1- 2004 037 528
- US-A1- 2004 146 596
- US-A1- 2005 031 289
- US-B1- 6 560 395
- US-B1- 6 655 433

## Description

### BACKGROUND OF THE INVENTION

### Field of the Invention

The present invention relates generally to the field of fiber optics, and in particular to an improved method for forming, at an end of an existing multifiber ribbon cable having an initial first core-to-core spacing, a multifiber ribbon cable segment having an enlarged second core-to-core spacing.

### Background Art

A newly designed optical fiber ribbon cable has been introduced, in which the individual optical fibers within the ribbon have a core-to-core spacing of 200 µm, compared with earlier ribbon designs having a core-to-core spacing of 250 µm. The new design increases the cable density and improves the cable capacity to meet the fast-growing construction demands of data centers and Web 2.0-type networks.

In a common application, 200 µm-spaced, 12-fiber ribbons are mass fusion-spliced by craft personnel in the field. There are times when a 200 µm ribbon must be spliced to a 250 µm ribbon. There are currently no mass fusion splicers capable of a making a splice between a 200 µm ribbon and to a 250 µm ribbon.

US 2004/036188 A1 discloses an apparatus for recoating uncoated and spliced end portions of optical fibers, which comprises two mold blocks, each of which includes a groove. The mold blocks are arrangable in a closed state, wherein the grooves cooperate to form a mold cavity for the fiber end portions, and in an open state, wherein the fiber end portions are insertable into the grooves. The apparatus further includes an injection system for injecting a recoating material into the mold cavity, and a UV curing system for irradiating the recoating material with UV light, thus curing the recoating material. At least one mold block is made of a plastic material comprising a fluoroplastic, e.g. PCTFE, the plastic material being at least partly transparent to UV light to enable the curing system to irradiate the UV curable recoating material with UV light through this mold block.

EP 0 446 040 A1 discloses a photopolymerization molding apparatus having a light irradiator for photopolymerization (e.g. a halogen lamp), a photopolymerizable resin molding frame comprising a movable frame member and a fixed frame member, adjacent to which is a photopolymerizable resin feed device. The irradiator is disposed at a predetermined position where it can apply light to a photopolymerizable resin material in the frame through the light-transmitting portion of the frame.

US 2003/077345 A1 relates to an optical fiber recoating device provided for filling a recoating resin into molds, wherein semicircular mold grooves in molds into which the recoating resin is filled are longer than a bare fiber portion of an optical fiber, and an outer diameter of mold groove is larger than the outer diameter of semicircular sheath engaging grooves that engage a sheath of the optical fiber. As a result, a cylindrically shaped extending portion which extends to the sheath is formed to each end of the recoated sheath, so that joining strength of the recoated sheath is improved.

US 2004/037528 A1 relates to a recoating method for optical fiber, and in particular to prevent incorporation of bubbles into the recoating resin. In a recoating method for optical fiber, a bare fiber portion of an optical fiber is recoated by guiding recoating resin into mold forms, and the injection speed of the recoating resin injected into the mold forms is such that bubbles are not trapped due to the resin injection.

### SUMMARY OF INVENTION

The invention provides a method according to claim 1. Further developments of the invention are defined in the dependent claims. Any embodiments and examples of the description not falling within the scope of the claims do not form part of the invention and are provided for illustrative purposes only.

Further aspects of the invention are described below.

### BRIEF DESCRIPTION OF THE DRAWINGS

FIG. 1A shows a top view of an exemplary 200 µm optical fiber ribbon according to the prior art, and FIG. 1B shows a cross section of the fiber ribbon through the plane 1B-1B.
FIG. 2A shows a top view of an exemplary 250 µm optical fiber ribbon according to the prior art, and FIG. 2B shows a cross section of the fiber ribbon through the plane 2B-2B.
FIG. 3 shows a top view of an exemplary 200 µm fiber ribbon, in which the fiber-to-fiber spacing has been modified with the method of the claimed invention.
FIG. 4 shows a cross section of the modified fiber ribbon through the plane 4-4.
FIG. 5 shows an isometric view of unassembled lower and upper portions of a mold used according to the claimed invention.
FIG. 6 shows a wireframe isometric view of the mold shown in FIG. 5 in its assembled configuration.
FIG. 7 shows an isometric view of newly formed ribbon segment using the mold shown in FIGS. 5 and 6.
FIG. 8 shows a schematic diagram of a ribbonizing system employing a mold of the type shown in FIGS. 5 and 6.
FIG. 9 shows an isometric view of a ribbonizing system provided according to the claimed invention.
FIG. 10 shows an isometric view of the molding subassembly in the FIG. 9 system, in an open configuration.
FIG. 11 shows an isometric view of the mold in the FIG. 9 system, in an unassembled configuration.
FIG. 12 shows a wireframe isometric view of the FIG. 11 mold, in an assembled configuration.
FIG. 13 shows a top view of exemplary first and second fibers to be spliced together, wherein the first fiber has been modified using the FIG. 9 system.
FIG. 14 shows an isometric view of the ultraviolet light unit used in the FIG. 9 system.
FIG. 15 shows a flowchart of a method according to the claimed invention.

### DETAILED DESCRIPTION

Aspects of the present invention are directed to systems and techniques to facilitate the splicing of a 200 µm-spaced fiber ribbon to a 250 µm-spaced fiber ribbon. It will be appreciated from the following discussion that aspects of the invention can be adapted for use in other contexts, including for example ribbons having different numbers of fibers, different configurations, and different core-to-core spacings.

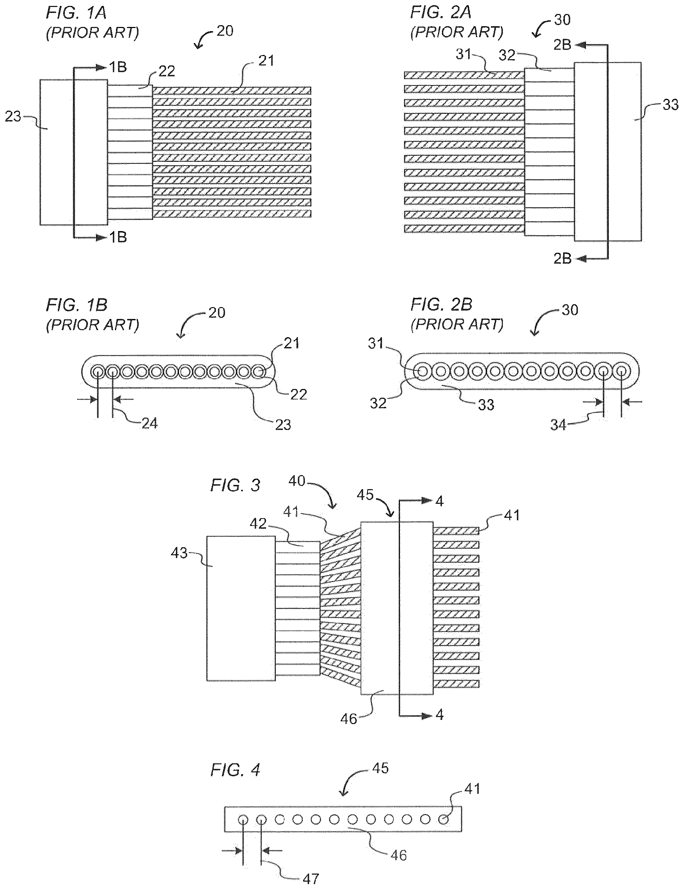

FIG. 1A shows a top view of an exemplary 200 µm fiber ribbon 20 according to the prior art, and FIG. 1B shows a cross section of the 200 µm fiber ribbon 20 through the plane 1B-1B. FIG. 2A shows a top view of an exemplary 250 µm fiber ribbon 30 according to the prior art, and FIG. 2B shows a cross section of the 250 µm fiber ribbon 30 through the plane 2B-2B.

As discussed above, the splicing of a 200 µm fiber ribbon to a 250 µm fiber ribbon is problematic because of the mismatch between the respective core-to-core spacings of the individual fibers packaged into each ribbon.

As shown in FIGS. 1A-1B and 2A-2B, each fiber ribbon 20, 30 comprises a 1x12 array of individual optical fibers 21, 31 each of which having a respective coating 22, 32. In the ribbon 20 shown in FIGS. 1A-1B, the individual optical fibers have a core-to-core spacing 24 of 200 µm. In the ribbon 30 shown in FIGS. 2A-2B, the individual optical fibers have a core-to-core spacing 34 of 250 µm. Each array of coated fibers is depicted as being packaged inside of an outer jacket 23, 33 (i.e., in an encapsulated ribbon design). It is noted that the invention may be practiced in other contexts including, for example, splicing together fiber ribbons employing an edge-bonded design.

As mentioned above, the spacing mismatch means that a mass fusion splicer according to the prior art cannot be used to splice the two ribbons together. Aspects of the present invention are directed to structures and techniques for modifying the core-to-core spacing of the fibers in a first ribbon to match the core-to-core spacing of the fibers in a second ribbon.

FIG. 3 shows a top view of a 200 µm fiber ribbon 40 that has been modified in accordance with an exemplary practice of a technique according to the present invention for splicing the 200 µm fiber ribbon 40 to a second fiber ribbon having a core-to-core spacing of 250 µm. FIG. 4 shows a cross section of the modified fiber ribbon 40 through the plane 4-4.

As described in detail below, a system is provided for use in the field, or in other contexts, that forms at least one molded strip 46 around the individual stripped fibers 41 at the end of the 200 µm ribbon to form a new ribbon segment 45 having a core-to-core spacing 47 of 250 µm, thereby allowing a standard mass fusion splicer to be used.

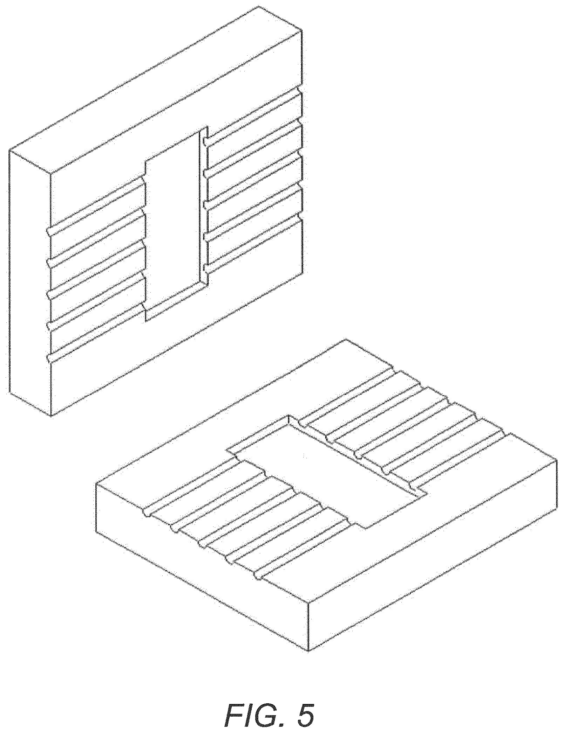

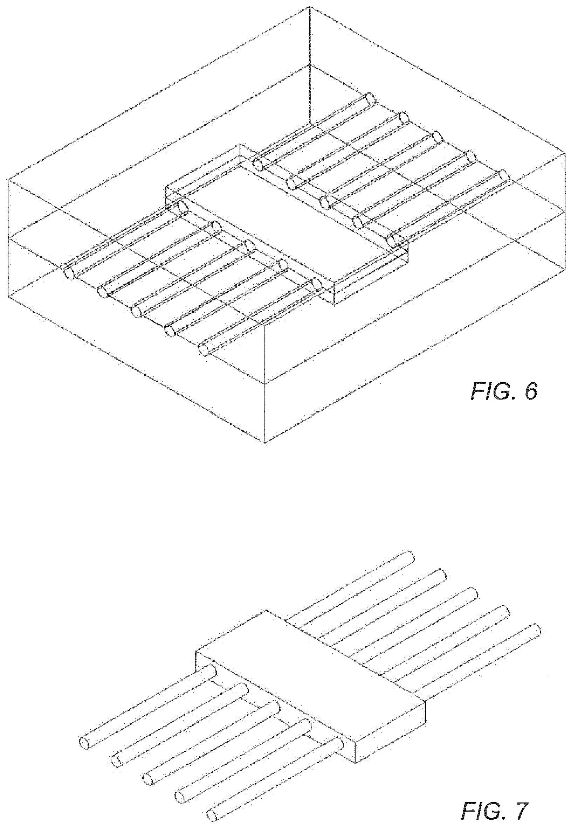

FIG. 5 shows an isometric view of an exemplary 5-fiber mold used according to an aspect of the invention. The mold comprises a lower portion and a higher portion that are fabricated from a UV-transparent material, such as quartz. FIG. 6 shows a wireframe isometric view of the assembled mold, in which the lower portion and upper portion are fitted together at a split line.

The lower and upper mold portions are each provided with a respective set of semicircular grooves and a rectangular central cavity. When the lower and upper lower portions of the mold are fitted together, the five respective pairs of semicircular grooves form five circular channels that extend from a proximal end of the assembled mold to a distal end. Grooves and be formed using a wire-cut technique.

It is noted that alternative practices of the invention may employ grooves having shapes different from the semicircular shape depicted in FIG. 5, resulting in an assembled mold in which the individual fiber channels have non-circular shapes. For example, V-shaped or rectangular grooves can be employed, resulting in channels shaped as a square, or the like, that is suitable for holding each of the individual ribbon fibers.

Returning to FIG. 5, the circular channels are dimensioned to fit closely around a corresponding set of bare optical fibers having an outer diameter of 125 µm. The lower and upper rectangular cavities form a central rectangular chamber having a width and a height slightly larger than the matrix of fibers to be ribbonized, and a length of approximately 0.25 inch. The circular channels and the central chamber are positioned with respect to each other, such that fibers threaded through the circular channels pass through the central chamber without touching its walls.

In an exemplary practice of the invention, after the lower and upper portions of the mold are assembled together, an end of a 5-fiber 200 µm ribbon is separated and stripped to produce five individual, bare fibers. The bare fibers are threaded through respective mold channels. A UV-curable resin (i.e., epoxy) is injected into the chamber, and the resin is then cured by a UV light that passes through the UV-transparent mold material. After the epoxy is cured the mold is opened, and the ribbonized fiber removed.

FIG. 7 shows an isometric view of the newly formed ribbon segment, wherein a strip has been molded around the matrix of individual fibers, resulting in a core-to-core spacing of 250 µm.

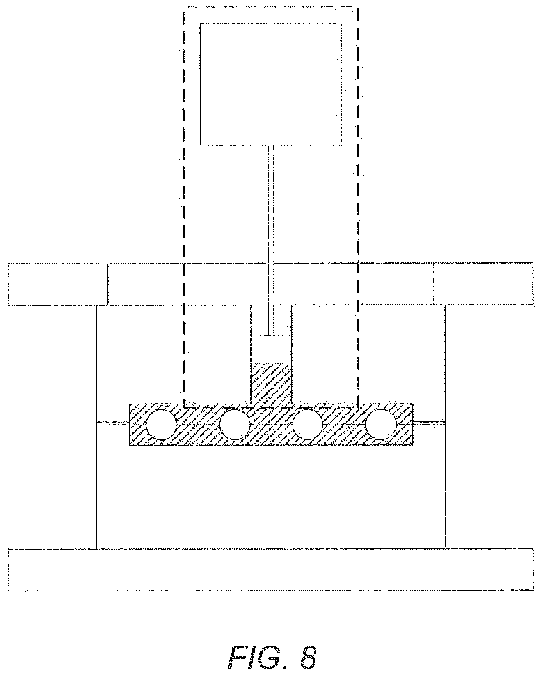

FIG. 8 shows a schematic diagram of a system incorporating a mold of the type illustrated in FIGS. 5-7. During the molding process, the mold's lower and upper portions, are held together by a suitable holder structure, which includes an upper window.

System further includes a pusher for injecting a UV-curable resin (e.g., epoxy), or other suitable flowable material from a reservoir into the central chamber. Mold further includes side vents to allow air to escape from the chamber, as resin is injected into the central chamber. As mentioned above, mold is fabricated from a material that is transparent to the curing light. Mold further includes a split line that is configured to allow the lower and upper portions of the mold to be separated to release the completed ribbon.

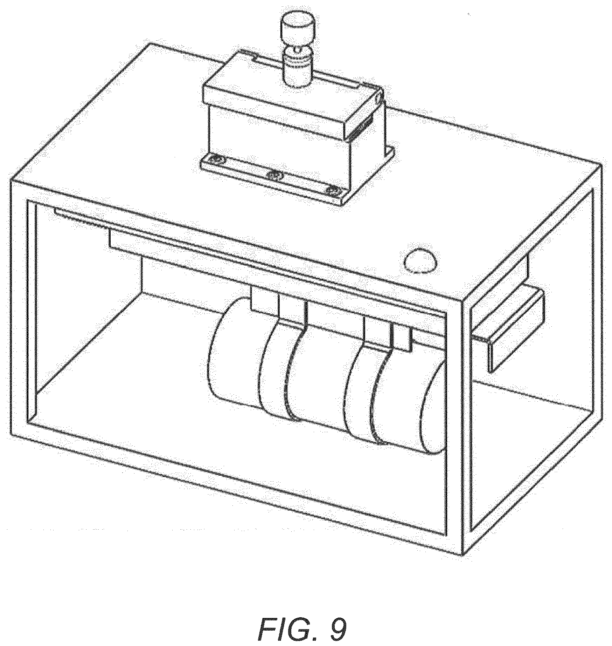

FIG. 9 shows a ribbonizing system provided according to a further aspect of the invention. The structural framework for system comprises a chassis having an enclosure therein. A molding subassembly is mounted to the top of the chassis. An ultraviolet light unit is mounted into the chassis enclosure, and is operated by switch.

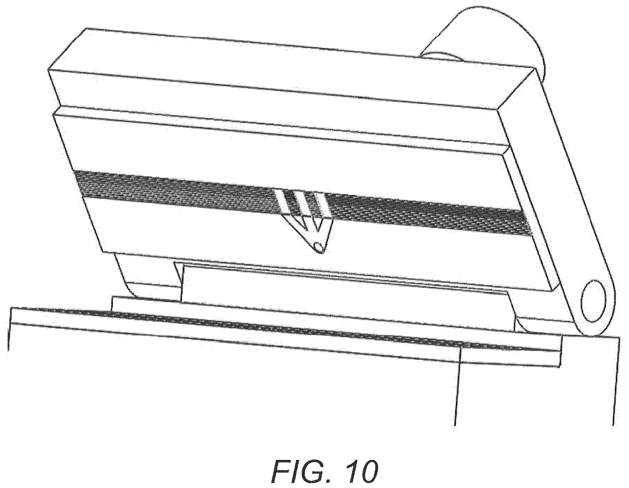

The molding subassembly comprises a base and a lid that is hingeably attached on top of the base. The lid is configured to swing between a closed position, shown in FIG. 9, and an open position, shown in FIG. 10. As shown in FIG. 10, an epoxy reservoir and pump are mounted to the upper surface of the lid.

The molding subassembly further comprises a two-piece mold having a lower portion mounted to the molding subassembly base and an upper portion mounted to the molding subassembly lid.

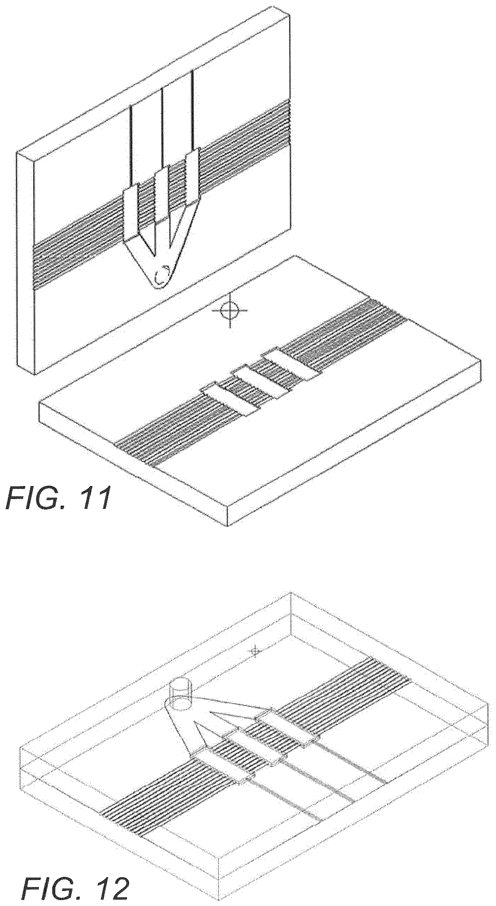

FIG. 11 shows an isometric view of the lower and upper mold portions in an open, unassembled configuration. FIG. 12 shows a wireframe isometric view of the lower and upper mold portions in a closed configuration.

As shown in FIGS. 11 and 12, the lower and upper portions of the mold include semicircular grooves and respective sets of three rectangular cavities that fit together to form a plurality of circular channels for receiving a corresponding plurality of optical fibers, and three rectangular chambers for forming three ribbon strips around optical fibers contained in the circular channels. It is noted that the number of rectangular cavities can be greater than or less than the three cavities shown in FIGS. 11 and 12.

The upper portion of the mold is provided with an input port for receiving epoxy resin from the reservoir (FIG. 9), and three input channels for feeding epoxy into respective chambers. The upper portion of the mold further includes air vents for allowing air to escape from the chambers as they are filled with injected epoxy.

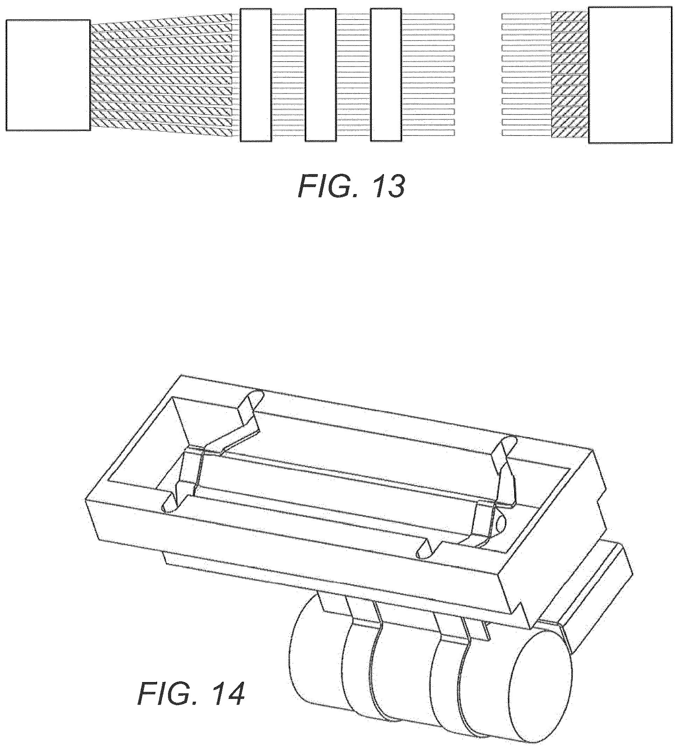

FIG. 13 shows an exemplary 200 µm ribbon that has been ribbonized using the system shown in FIG. 9 in order to allow the 200 µm ribbon to be spliced to an exemplary 250 µm ribbon. In the depicted practice of the invention, three strips are molded around bare individual fibers to form the ribbonized segment.

FIG. 14 shows an isometric view of ultraviolet light unit, mounted into the chassis enclosure. The ultraviolet light unit comprises a housing, UV lighting element, a capacitor, and timer circuitry.

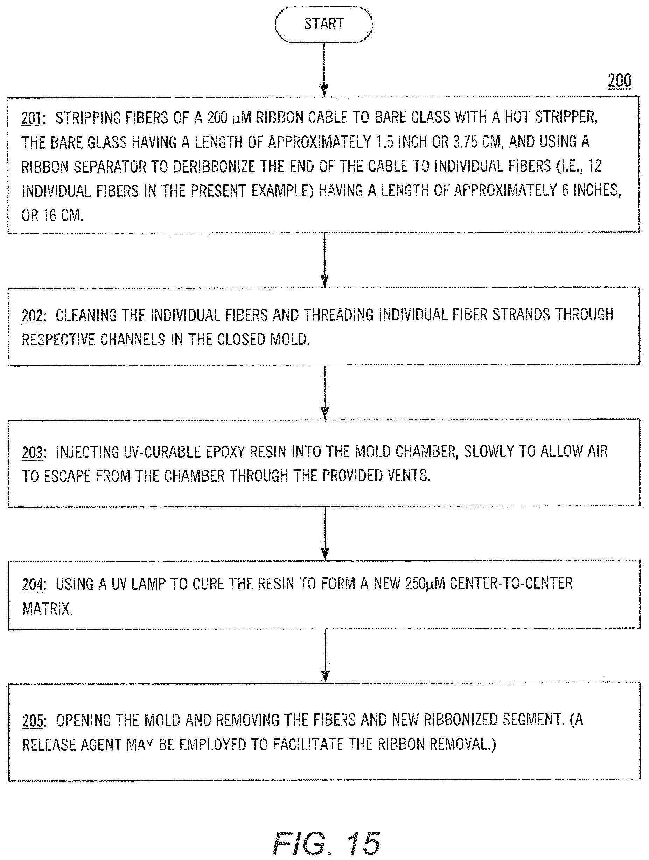

FIG. 15 shows a flowchart of a method 200 according to a further aspect of the invention. The method comprises the following steps:
**201:** Stripping fibers of a 200 µm ribbon cable to bare glass with a hot stripper, the bare glass having a length of approximately 1.5 inch or 3.75 cm, and using a ribbon separator to deribbonize the end of the cable to individual fibers (i.e., 12 individual fibers in the present example) having a length of approximately 6 inches, or 16 cm.
**202:** Cleaning the individual fibers and threading individual fiber strands through respective channels in the closed mold.
**203:** Injecting UV-curable epoxy resin into the mold chamber, slowly to allow air to escape from the chamber through provided vents.
**204:** Using a UV lamp to cure the resin to form a new 250µm center-to-center matrix.
**205:** Opening the mold and removing the fibers and new ribbonized segment. (A release agent may be employed to facilitate the ribbon removal.)

### Conclusion

While the foregoing description includes details that will enable those skilled in the art to practice the invention, it should be recognized that the description is illustrative in nature and that many modifications and variations thereof will be apparent to those skilled in the art having the benefit of these teachings. It is accordingly intended that the invention herein be defined solely by the claims appended hereto.

## Claims

1. A method (200) for forming, at an end of an existing multifiber ribbon cable having an initial first core-to-core spacing, a multifiber ribbon cable segment having an enlarged second core-to-core spacing, comprising:
(a) providing a system comprising:
a chassis;
an enclosure within the chassis;
a mold mounted on top of the chassis,
a reservoir and pumping system mounted on top of the mold for holding a flowable, light-curable material and injecting the light-curable material into the mold; and
a curing light source mounted into the enclosure;
wherein the mold is formed from a material that is transparent to the curing light and is positioned such that light-curable material injected into the mold is exposed to light from the curing light source;
wherein the mold comprises a base and a lid that, when in a closed configuration, define an internal cavity comprising a plurality of individual fiber channels corresponding to individual fibers of the existing multifiber ribbon cable with the initial first core-to-core spacing, wherein the plurality of individual fiber channels has a spacing equal to that of the second enlarged core-to-core spacing, wherein each individual fiber channel passes through the internal cavity, wherein each individual fiber channel extends between a respective entrance at a first end of the mold to a respective exit at a second end of the mold;
wherein the assembled mold further includes an injection system for receiving the light-curable, flowable material from the reservoir and pumping system and feeding it into the internal cavity, and at least one vent for allowing air to escape from the internal cavity as the light-curable, flowable material is fed into the internal cavity;
(b) placing the mold into a closed configuration;
(c) stripping (201) an end portion of the existing multifiber ribbon cable to bare glass, separating the end portion of the existing multifiber ribbon cable into individual fibers, and cleaning them;
(d) threading (202) the individual fibers through respective channels in the mold;
(e) injecting (203) the curable material into the chamber;
(f) using (204) the curing light to cure the flowable material; and
(g) opening (205) the mold and remove the ribbonized fiber.

2. The method of claim 1,
wherein the flowable, curable material comprises an epoxy resin that is cured by exposure to ultraviolet light, and
wherein the curing light source comprises an ultraviolet light unit with capacitor and timer.

3. The method of claim 2,
wherein the mold base and lid are fabricated from quartz.

4. The method of claim 1,
wherein the lid is hingeably mounted to the base and is movable between a closed configuration and an open position,
wherein the closed configuration is used for insertion of the individual fibers, injection of the flowable material into the cavity, and curing of the flowable material, and removal of the completed multifiber ribbon cable segment.

5. The method of claim 1,
wherein the mold comprises a plurality of internal cavities, resulting in the formation of a corresponding plurality of new multifiber ribbon cable segments.

6. The method of claim 1,
wherein the initial core-to-core spacing is 200 µm, and the enlarged core-to-core spacing is 250 µm.

## Patentansprüche

1. Ein Verfahren (200) zum Bilden, an einem Ende eines bestehenden Mehrfaser-Bandkabels mit einem anfänglichen ersten Kern-zu-Kern-Abstand, eines Mehrfaser-Bandkabelsegments mit einem vergrößerten zweiten Kern-zu-Kern-Abstand, das folgende Schritte aufweist:
(a) Bereitstellen eines Systems, das folgende Merkmale aufweist:
ein Chassis;
eine Umhüllung innerhalb des Chassis;
eine Form, die auf dem Chassis befestigt ist,
ein Reservoir- und Pumpsystem, das auf der Form befestigt ist, um ein fließfähiges, lichthärtbares Material aufzunehmen und das lichthärtbare Material in die Form einzuspritzen; und
eine aushärtende Lichtquelle, die in der Umhüllung befestigt ist;
wobei die Form aus einem Material gebildet ist, das für das aushärtende Licht durchlässig ist und so positioniert ist, dass lichthärtbares Material, das in die Form eingespritzt wird, Licht von der aushärtenden Lichtquelle ausgesetzt wird;
wobei die Form eine Basis und einen Deckel aufweist, die, wenn dieselben in einer geschlossenen Konfiguration sind, einen inneren Hohlraum definieren, der eine Mehrzahl von einzelnen Faserkanälen aufweist, die einzelnen Fasern des bestehenden Mehrfaser-Bandkabels mit dem anfänglichen ersten Kern-zu-Kern-Abstand entsprechen, wobei die Mehrzahl von einzelnen Faserkanälen einen Abstand gleich dem des zweiten vergrößerten Kern-zu-Kern-Abstands aufweist, wobei jeder einzelne Faserkanal durch den inneren Hohlraum verläuft, wobei sich jeder einzelne Faserkanal zwischen einem jeweiligen Eingang an einem ersten Ende der Form zu einem jeweiligen Ausgang an einem zweiten Ende der Form erstreckt;
wobei die zusammengesetzte Form ferner ein Einspritzsystem zum Aufnehmen des lichthärtbaren, fließfähigen Materials von dem Reservoir- und Pumpsystem und zum Zuführen desselben in den inneren Hohlraum und zumindest eine Entlüftung aufweist, um zu ermöglichen, dass Luft aus dem inneren Hohlraum entweicht, wenn das lichthärtbare, fließfähige Material in den inneren Hohlraum zugeführt wird;
(b) Platzieren der Form in eine geschlossene Konfiguration;
(c) Abziehen (201) eines Endabschnitts des bestehenden Mehrfaser-Bandkabels bis zum blankem Glas, Trennen des Endabschnitts des bestehenden Mehrfaser-Bandkabels in einzelne Fasern und Reinigen derselben;
(d) Ziehen (202) der einzelnen Fasern durch jeweilige Kanäle in der Form;
(e) Einspritzen (203) des härtbaren Materials in die Kammer;
(f) Verwenden (204) des aushärtenden Lichts, um das fließfähige Material auszuhärten; und
(g) Öffnen (205) der Form und Entfernen der bandförmigen Faser.

2. Das Verfahren gemäß Anspruch 1,
bei dem das fließfähige, härtbare Material ein Epoxidharz aufweist, das durch Aussetzen gegenüber ultraviolettem Licht ausgehärtet wird, und
bei dem die aushärtende Lichtquelle eine Ultraviolettlichteinheit mit Kondensator und Zeitgeber aufweist.

3. Das Verfahren gemäß Anspruch 2,
bei dem die Formbasis und der Deckel aus Quarz hergestellt sind.

4. Das Verfahren gemäß Anspruch 1,
bei dem der Deckel schwenkbar an der Basis befestigt ist und zwischen einer geschlossenen Konfiguration und einer offenen Position bewegbar ist,
wobei die geschlossene Konfiguration zum Einfügen der einzelnen Fasern, Einspritzen des fließfähigen Materials in den Hohlraum und Aushärten des fließfähigen Materials und Entfernen des fertigen Mehrfaser-Bandkabelsegments verwendet wird.

5. Das Verfahren gemäß Anspruch 1,
bei dem die Form eine Vielzahl von inneren Hohlräumen aufweist, was zur Bildung einer entsprechenden Mehrzahl von neuen Mehrfaser-Bandkabelsegmenten führt.

6. Das Verfahren gemäß Anspruch 1,
bei dem der anfängliche Kern-zu-Kern-Abstand 200 µm beträgt und der vergrößerte Kern-zu-Kern-Abstand 250 µm beträgt.

## Revendications

1. Procédé (200) de formation, à une extrémité d'un câble de ruban multifibre existant présentant un premier espacement entre noyaux initial, d'un segment de câble de ruban multifibre présentant un deuxième espacement entre noyaux agrandi, comprenant le fait de:
(a) prévoir un système comprenant:
un châssis;
une enceinte à l'intérieur du châssis;
un moule monté au-dessus du châssis,
un système de réservoir et de pompage monté au-dessus du moule, destiné à contenir un matériau photo-polymérisable pouvant circuler et à injecter le matériau photo-polymérisable dans le moule; et
une source de lumière de polymérisation montée dans l'enceinte;
dans lequel le moule est formé à partir d'un matériau qui est transparent à la lumière de polymérisation et est positionné de sorte que le matériau photo-polymérisable injecté dans le moule soit exposé à la lumière de la source de lumière de polymérisation;
dans lequel le moule comprend une base et un couvercle qui, lorsqu'ils se trouvent dans une configuration fermée, définissent une cavité interne comprenant une pluralité de canaux de fibre individuels correspondant à des fibres individuelles du câble multifibre existant avec le premier espacement entre noyaux initial, dans lequel la pluralité de canaux de fibre individuels présentent un espacement égal à celui du deuxième espacement entre noyaux agrandi, dans lequel chaque canal de fibre individuel passe à travers la cavité interne, dans lequel chaque canal de fibre individuel s'étend entre une entrée respective à une première extrémité du moule et une sortie respective à une deuxième extrémité du moule;
dans lequel le moule assemblé comprend par ailleurs un système d'injection destiné à recevoir le matériau photo-polymérisable pouvant circuler du système de réservoir et de pompage et à l'alimenter vers la cavité interne, et au moins un évent destiné à permettre à l'air de s'échapper de la cavité interne lorsque le matériau fluide photo-polymérisable pouvant circuler est alimenté vers la cavité interne;
(b) placer le moule dans une configuration fermée;
(c) dénuder (201) une partie d'extrémité du câble ruban multifibre existant jusqu'au verre nu, séparer la partie d'extrémité du câble ruban multifibre existant en fibres individuelles et les nettoyer;
(d) enfiler (202) les fibres individuelles à travers les canaux respectifs dans le moule;
(e) injecter (203) le matériau polymérisable dans la chambre;
(f) utiliser (204) la lumière de polymérisation pour polymériser le matériau pouvant circuler; et
(g) ouvrir (205) le moule et retirer la fibre rubanée.

2. Procédé selon la revendication 1,
dans lequel le matériau polymérisable pouvant circuler comprend une résine époxy qui est polymérisée par exposition à la lumière ultraviolette, et
dans lequel la source de lumière de polymérisation comprend une unité de lumière ultraviolette avec un condensateur et une minuterie.

3. Procédé selon la revendication 2,
dans lequel la base et le couvercle du moule sont fabriqués à partir de quartz.

4. Procédé selon la revendication 1,
dans lequel le couvercle est monté de manière articulée sur la base et est déplaçable entre une configuration fermée et une position ouverte,
dans lequel la configuration fermée est utilisée pour l'insertion des fibres individuelles, l'injection du matériau pouvant circuler vers la cavité, la polymérisation du matériau pouvant circuler et le retrait du segment de câble de ruban multifibre terminé.

5. Procédé selon la revendication 1,
dans lequel le moule comprend une pluralité de cavités internes, résultant en la formation d'une pluralité correspondante de nouveaux segments de câble de ruban multifibre.

6. Procédé selon la revendication 1,
dans lequel l'espacement entre noyaux initial est de 200 µm, et l'espacement entre noyaux agrandi est de 250 µm.
